# EUROPÄISCHE PATENTSCHRIFT

(11) **EP 3 668 274 B1**
(45) Veröffentlichungstag und Bekanntmachung des Hinweises auf die Patenterteilung: **15.05.2024**
(21) Anmeldenummer: 19212216.6
(22) Anmeldetag: 28.11.2019
(51) Int. Cl.: H05B 6/12

(54) **VERFAHREN ZUM BETRIEB EINES INDUKTIONSKOCHFELDS**
METHOD TO CONTROL AN INDUCTION COOKING PLATE
MÉTHODE DE CONTRÔLE D'UNE PLAQUE À INDUCTION

(30) Priorität: 12.12.2018 DE 102018221521
(43) Veröffentlichungstag der Anmeldung: 17.06.2020
(73) Patentinhaber: E.G.O. Elektro-Gerätebau GmbH, 75038 Oberderdingen (DE)
(72) Erfinder: Egenter, Christian, 75015 Bretten (DE); Frank, Marcus, 75056 Sulzfeld (DE); Fuchs, Etienne, 68789 St. Leon-Rot (DE); Lomp, Stephane, 75038 Oberderdingen (DE); Vötter, Karl-Heinz, 75015 Bretten (DE)
(74) Vertreter: Patentanwälte Ruff, Wilhelm, Beier, Dauster & Partner mbB

(56) Entgegenhaltungen:
- WO-A2-2015/128578
- DE-A1-102012 200 294

## Beschreibung

### ANWENDUNGSGEBIET UND STAND DER TECHNIK

Die Erfindung betrifft ein Verfahren zum Betrieb eines Induktionskochfelds, insbesondere mit speziell ausgebildeten Kochgefäßen.

Aus der DE 102004016631 A1 ist eine Anordnung bekannt, mit der das Aufsetzen eines Kochgefäßes sowie dessen Position an einer Heizeinrichtung bzw. einen Heizbereich bei einem Kochfeld erkannt werden kann. Hier sind mehrere kapazitiv wirkende Sensoren vorgesehen im Außenbereich einer Heizeinrichtung.

Aus der WO 2015/128578 A2 ist ein Induktionskochfeld bekannt, bei dem nach darauf aufgestellten Kochgefäßen gesucht werden kann. Jedes Kochgefäß weist dabei eine Sendevorrichtung mit Sendeantenne auf. Diese Sendevorrichtung ist mit einem Magnetfeldsensor verbunden. Dieser kann ein von einer Induktionsheizspule ausgesandtes Wechselmagnetfeld erkennen, mit der normalerweise auch das Kochgefäß beheizt wird. So kann die Sendevorrichtung des Kochgefäßes bei Empfang eines solchen Wechselmagnetfeldes Signale dazu aussenden. Diese werden dann im Induktionskochfeld ausgewertet als Zeichen dafür, dass eine bestimmte Induktionsheizspule ein bestimmtes Kochgefäß mit einem solchen Wechselmagnetfeld beaufschlagt. Die Signalübertragung kann möglicherweise über ein externes Gerät wie beispielsweise ein mobiles Endgerät erfolgen.

Aus der DE 10 2012 200 294 A1 ist ein weiteres Induktionskochfeld bekannt, bei dem ein Temperatursensor in ein Kochgefäß eingebracht wird oder an einem Kochgefäß befestigt wird. Der Temperatursensor weist eine Sendevorrichtung zur drahtlosen Übertragung von Signalen an eine Empfangsvorrichtung des Induktionskochfelds auf. Wird eine Induktionsheizspule, über der das Kochgefäß mit dem Temperatursensor aufgestellt ist, mit einem bestimmten Leistungsmuster zwischen Einschalten und Ausschalten beheizt, so ergibt sich ein diesem entsprechender bzw. davon bestimmter Temperaturverlauf an dem Kochgefäß. Dieser Temperaturverlauf wird von dem Temperatursensor erfasst und drahtlos an das Induktionskochfeld gesendet. Dort wird dann entsprechend dem Muster die Zuordnung zu der bestimmten Induktionsheizspule vorgenommen. So kann das Kochgefäß mit diesem Temperatursensor mit der Induktionsheizspule verknüpft werden zur temperaturgeregelten Ansteuerung, beispielsweise für ein Automatikkochprogramm.

### AUFGABE UND LÖSUNG

Der Erfindung liegt die Aufgabe zugrunde, ein eingangs genanntes Verfahren sowie ein zu dessen Durchführung ausgebildetes Induktionskochfeld zu schaffen, mit denen Probleme des Standes der Technik beseitigt werden können und es insbesondere möglich ist, sowohl das Aufsetzen eines Kochgefäßes auf oder in einen Heizbereich als auch eine Identität des Kochgefäßes sicher erkennen und einer Bedienperson gegebenenfalls anzeigen zu können.

Gelöst wird diese Aufgabe durch ein Verfahren mit den Merkmalen des Anspruchs 1 sowie durch ein Induktionskochfeld mit den Merkmalen des Anspruchs 16. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Induktionskochfeld beschrieben und erläutert. Sie sollen jedoch unabhängig davon sowohl für das Verfahren als auch für das Induktionskochfeld selbstständig und unabhängig voneinander gelten können. Der Wortlaut der Ansprüche wird durch ausdrückliche Bezugnahme zum Inhalt der Beschreibung gemacht.

Für das Verfahren zum Betrieb eines Induktionskochfelds mit mehreren Induktionsheizspulen ist vorgesehen, dass jede Induktionsheizspule einen Heizbereich aufweist. Dieser wird im Wesentlichen von der Fläche darüber entsprechend der Größe der Induktionsheizspule gebildet. Ein Kochgefäß kann so auf dem Induktionskochfeld angeordnet werden, dass es mindestens einen Heizbereich überdeckt, vorteilhaft nur einen einzigen Heizbereich einer Induktionsheizspule. Jede Induktionsheizspule ist dazu ausgebildet, Energie zum Beheizen eines Kochgefäßes im Heizbereich zu übertragen, wobei sie dazu auf bekannte Art und Weise von einem Umrichter angesteuert wird. Jedes Kochgefäß weist eine Sendevorrichtung mit Sendeantenne auf zum Senden eines Signals, das abhängt von empfangener Energie bzw. von der Art der übertragenen Energie von einer Induktionsheizspule, deren Heizbereich das Kochgefäß zumindest teilweise überdeckt. Vorteilhaft überdeckt dieses Kochgefäß den Heizbereich weitgehend oder vollständig.

Es ist eine Empfangseinrichtung vorgesehen ist zum Empfangen von Signalen einer Sendevorrichtung eines Kochgefäßes bzw. aller Sendevorrichtungen von Kochgefäßen auf dem Induktionskochfeld. Diese Empfangseinrichtung kann am Induktionskochfeld vorgesehen sein, alternativ oder zusätzlich an einer externen Bedieneinrichtung oder einem mobilen Endgerät.

Es ist eine Steuerung vorgesehen, die die Signale von der Empfangseinrichtung erhält und die Informationen zu einem Senden bzw. Übertragen von Energie der Induktionsheizspulen aufweist oder erhält. Diese Steuerung kann ähnlich wie die Empfangseinrichtung am Induktionskochfeld vorgesehen sein, alternativ oder zusätzlich an einer externen Bedieneinrichtung oder einem mobilen Endgerät. Bevorzugt sind Empfangseinrichtung und Steuerung gemeinsam bzw. im selben Gerät angeordnet.

Das Verfahren weist die folgenden Schritte auf:
Mindestens ein Kochgefäß wird über einem Heizbereich einer Induktionsheizspule angeordnet, vorteilhaft genau ein Kochgefäß für genau einen Erkennungsvorgang. Dies kann bei ausgeschaltetem oder bei eingeschaltetem Induktionskochfeld erfolgen, ebenso bei bereits betriebenem bzw. heizendem Induktionskochfeld. Eine Vielzahl der Induktionsheizspulen, insbesondere alle Induktionsheizspulen, werden angesteuert zum Senden bzw. Übertragen von Energie in einem Muster, wobei dabei Dauer und/oder Amplitude variiert werden als Codierung. Die Codierung besteht darin, dass die Amplitude der gesendeten bzw. übertragenen Energie innerhalb der Codierung über der Zeit variiert, insbesondere zwischen Null und einem Codier-Maximalwert variiert, und/oder die Dauer der Energieübertragung variiert, und/oder die Dauer zwischen zwei Energieübertragungen variiert, und/oder die Anzahl der Energieübertragungen variiert. Diese Möglichkeiten können einzeln oder auch kombiniert verwendet werden, wobei dies auch von der Anzahl der benötigten Codierungen bzw. der abzuprüfenden Induktionsheizspulen abhängt.

Überdeckt ein Kochgefäß einen Heizbereich einer Induktionsheizspule, die Energie mit einer bestimmten bzw. individuellen Codierung übertragen hat, so sendet die Sendevorrichtung des Kochgefäßes an die Empfangseinrichtung ein Signal oder eine Abfolge mehrerer Signale, die eindeutig von dieser empfangenen Codierung abhängen und/oder die zu genau dieser empfangenen Codierung zuordenbar sind. Die Steuerung erhält die von der Empfangseinrichtung empfangenen Signale und vergleicht diese mit Informationen über die von den Induktionsheizspulen gesendeten bzw. übertragenen Energie als Codierungen, die die Steuerung kennt. So kann sie ermitteln, welche Codierung von übertragener Energie von einer bestimmten Induktionsheizspule zu einem empfangenen Signal oder einer Abfolge mehrerer Signale passt, wobei das Signal zum selben Zeitpunkt oder kurz danach empfangen worden ist. Darauf aufbauend kann die Steuerung eine Zuordnung dieses Signals oder diese Abfolge mehrerer Signale sendenden Kochgefäßes zu dem Heizbereich bzw. zu der zu dem Heizbereich zugehörigen Induktionsheizspule vornehmen, da ja klar ist, dass das Kochgefäß nur von der darunter angeordneten Induktionsheizspule die das Signal bestimmende Codierung empfangen haben kann. So kann die Steuerung bestimmen, dass dieses Kochgefäß den Heizbereich dieser Induktionsheizspule überdeckt. Alternativ kann bei der Erfindung auch grundsätzlich die Ermittlung der sendenden Induktionsheizspule bzw. die Bestimmung der Zuordnung des Kochgefäßes zu der Induktionsheizspule auch im Kochgefäß selbst stattfinden, beispielsweise in einem integrierten Schaltkreis bzw. einem Mikrocontroller des Kochgefässes. Eine Information darüber wird dann vorteilhaft an die genannte Steuerung übersandt.

Danach kann beispielsweise mit einem Kochprogramm, wie es auch an sich bekannt ist, diese Induktionsheizspule genau für die Beheizung dieses Kochgefässes angesteuert werden. An dem Kochgefäß können in vorteilhafter Ausgestaltung Sensoren angeordnet sein zur Überwachung eines Kochvorgangs im Kochgefäß, und deren Daten können dann genau zugeordnet werden.

In vorteilhafter Ausgestaltung der Erfindung weist ein Kochgefäß eine Empfangsspule auf, um ein zum Übertragen von Energie genutztes magnetisches Wechselfeld einer Induktionsheizspule als elektrische Energie zu speichern bzw. in elektrische Energie umzuwandeln. Mittels der Sendeantenne der Sendevorrichtung kann dann das Signal ausgesendet werden. Vorteilhaft kann die dazu benötigte Energie die zuvor empfangene bzw. gespeicherte Energie sein.

Im Kochgefäß kann ein Energiespeicher vorgesehen sein, der mit der Empfangsspule verbunden ist, wobei die von der Empfangsspule empfangene Energie in dem Energiespeicher gespeichert wird wie zuvor beschrieben. Dann kann mit bzw. entsprechend der gespeicherten Energie ein Signal oder eine Abfolge mehrerer Signale von der Sendevorrichtung ausgesendet werden. Dieses entspricht vorteilhaft der empfangenen Codierung bzw. enthält diese oder ihre Kennzeichnung.

Die von der Empfangsspule empfangene Energie kann direkt zur elektrischen Ansteuerung der Sendeantenne genutzt werden zum Senden eines Signals oder einer Abfolge mehrerer Signale, was eine Alternative zum vorgenannten Abspeichern der Energie sein kann. Dabei können die Länge und/oder die Stärke des mindestens einen Signals, insbesondere die Abfolge mehrerer Signale, der Varianz von Dauer und/oder Amplitude der Codierung entsprechen. So kann eine Information übertragen werden, beispielsweise die Nummer oder Kennung derjenigen Induktionsheizspule, in deren Heizbereich sich das Kochgefäß befindet und deren Codierung somit empfangen worden ist.

Dabei kann vorgesehen sein, dass die Sendeantenne ein Signal sendet, sobald an die Empfangsspule Energie von einer Induktionsheizspule übertragen wird, deren Heizbereich das Kochgefäß überdeckt bzw. es dort angeordnet ist. Vorteilhaft sendet die Sendevorrichtung solange ein Signal, wie Energie von der Induktionsheizspule als Codierung an die Empfangsspule übertragen bzw. gesendet wird. Sobald keine Energie mehr von der Induktionsheizspule an die Empfangsspule übertragen wird sendet die Sendevorrichtung auch kein Signal mehr.

In weiterer Ausgestaltung kann das Senden bzw. Übertragen von Energie bei Induktionsheizspulen, bei denen nicht bekannt ist, ob ihr Heizbereich von einem Kochgefäß überdeckt ist, zur Erkennung von in ihrem Heizbereich angeordneten Kochgefäßen häufig und/oder regelmäßig wiederholt werden. Dies kann insbesondere mit einer Häufigkeit oder Wiederholfrequenz entsprechend einem zeitlichen Abstand von weniger als 1 min erfolgen, bevorzugt weniger als 5 sec. So wird die Steuerung recht schnell informiert, sobald ein solches Kochgefäß im Heizbereich einer Induktionsheizspule angeordnet worden ist.

Vorteilhaft kann nur in dem Fall ein Senden bzw. Übertragen von Energie der Induktionsheizspulen mit Codierung erfolgen, wenn sich ein Kochgefäß mit Sendevorrichtung zur Erkennung einer Codierung am Induktionskochfeld meldet oder wenn eine Bedienperson dies in eine Steuerung des Induktionskochfelds eingibt.

Vorteilhaft kann vorgesehen sein, dass das Senden bzw. Übertragen von Energie der Induktionsheizspulen mit Codierung zur Erkennung von im Heizbereich angeordneten Kochgefäßen zumindest auch in dem Fall erfolgt, dass eine Änderung einer Überdeckung eines Heizbereichs durch ein Kochgefäß erkannt wird. Dies bedeutet den Fall, dass das Kochgefäß verschoben worden ist, entweder weit weg bzw. aus dem Heizbereich heraus oder nur um wenige cm verschoben worden ist. So kann dies auch erkannt werden.

In weiterer Ausgestaltung des Verfahrens kann vorgesehen sein, dass das Verfahren nur dann auf einem mobilen Endgerät oder einem externen Steuergerät mit Steuerung und Empfangseinrichtung durchgeführt wird, wenn eine App darauf aktiv ist oder wenn das externe Steuergerät aktiviert ist. Das eigentliche vorgenannte Kochprogramm mit dem speziellen Kochgefäß kann dann auf diesem mobilen Endgerät oder externen Steuergerät durchgeführt werden. Wenn diese nicht aktiv sind muss auch das Verfahren nicht durchgeführt werden. Es kann vorgesehen sein, dass das Erkennen des Einschaltens oder Koppeln des mobilen Endgeräts oder des externen Steuergeräts mit dem Induktionskochfeld das Starten des Verfahrens automatisch bewirkt.

Es kann auch vorgesehen sein, das Verfahren nur dann durchzuführen, wenn ein spezielles Kochgefäß mit vorgenannter Empfangsspule und mit Sendevorrichtung auf dem Induktionskochfeld bzw. in einem Heizbereich entdeckt worden ist. Dazu können auch weitere sogenannte Topferkennungssensoren genutzt werden. Vorzugsweise weist das Kochgefäß auch noch einen integrierten Schaltkreis und mindestens einen Sensor auf wie zuvor erläutert. Der integrierte Schaltkreis kann den Sensor auswerten und dazu verwendet werden, die Information mit der Auswertung des Sensors, vorteilhaft also nicht nur das Sensorsignal direkt und alleine, an eine Steuerung des mobilen Endgeräts bzw. externen Steuergeräts oder an eine Steuerung des Induktionskochfelds zu senden.

Eine Codierung besteht bevorzugt aus sehr kurzer Leistungsabgabe, die nachfolgend "Pings" genannt werden, bzw. Pulsen, die mit einer Betriebsfrequenz oder der Resonanzfrequenz eines Schwingkreises mit der Induktionsheizspule schwingen. Ein Ping bzw. ein Puls weist eine oder mehrere Schwingungen auf bzw. dauert so lang und ist somit durch die Schwingungen gebildet. Vorzugsweise liegt eine Gesamtdauer eines Pings oder Pulses zwischen 1 µsec und 500 µsec, insbesondere zwischen 20 µsec und 100 µsec, ist also deutlich kürzer und energieärmer, als dies bei der Energieübertragung zum tatsächlichen Heizen der Fall ist. Diese Vorgehensweise ist dem Fachmann bekannt und braucht nicht weiter erläutert zu werden.

Es kann vorteilhaft vorgesehen sein, dass ein Abstand zwischen zwei Pings bzw. Pulsen innerhalb einer Codierung eine Dauer einer Netzhalbwelle des Versorgungsnetzes oder ein Vielfaches davon beträgt, vorzugsweise ein ganzzahliges Vielfaches davon. Die Frequenz des Versorgungsnetzes kann 50Hz oder 60Hz betragen, so dass der Abstand dann 10 msec oder etwas über 8 msec betragen kann.

Die Sendevorrichtung kann ausgewählt werden aus der Gruppe: Bluetooth, BLE, Zigbee, NFC, WiFi. Weitere Sendeeinrichtungen sind natürlich möglich, beispielsweise auch mit proprietären Übertragungsprotokollen. Bluetooth und BLE werden wegen der weiten Verbreitung ihrer Protokolle bevorzugt, wobei BLE wegen des sehr geringen Energieverbrauchs besonders bevorzugt wird.

Wie zuvor angesprochen können die Empfangseinrichtung und die Steuerung außerhalb des Induktionskochfelds angeordnet sein, vorzugsweise in einer externen Bedieneinrichtung. Diese externe Bedieneinrichtung weist dann Bedienelemente und mindestens eine Anzeigeeinrichtung auf. Sie kann ein mobiles Endgerät wie ein Smartphone oder ein Tablet-Computer sein, sie kann aber auch eine ganz spezielle externe Bedieneinrichtung für dieses Induktionskochfeld sein. Damit können möglicherweise neue Funktionalitäten in das Induktionskochfeld integriert werden bzw. ermöglicht werden, die ansonsten nur mit einem aufwendigen Austausch oder Umbau möglich wären, falls überhaupt.

Bevorzugt weist ein Kochgefäß neben der Empfangsspule und der Sendevorrichtung noch einen integrierten Schaltkreis quasi als Intelligenz auf. Eine gewisse Intelligenz kann auch dann in der Sendevorrichtung vorgesehen sein, damit sie die zu sendenden Signale entsprechend aufbereiten kann. Vorzugsweise ist auch noch mindestens ein Sensor wie zum Beispiel ein Temperatursensor oder Drucksensor vorgesehen. Damit kann ein genanntes Kochprogramm auf an sich bekannte Art und Weise geregelt werden bzw. ablaufen, weil ein Zustand im Kochgefäß selbst mit dem Sensor erfasst und berücksichtigt werden kann. Zusätzlich kann noch ein vorgenannter Energiespeicher eine Batterie, Akkumulator oder Kondensator sein. Alternativ kann bis auf einen Kondensator kein Energiespeicher in dem Kochgefäß vorgesehen sein, so dass nur darin Energie Betreiben eines integrierten Schaltkreises und auch der Sendevorrichtung gespeichert sein kann.

Bei einer Ansteuerung aller Induktionsheizspulen zum Übertragen von Energie zur Erkennung von im Heizbereich angeordneten Kochgefäßen kann zuerst für eine kurze Zeit Energie übertragen werden als Ping, wobei dann wird pausiert, und dann kann über eine variierende Anzahl von kurzen Abfolgen von Übertragen von Energie und Pausieren oder durch Abwarten eines bestimmten Vielfachen einer Wartezeit eine Vielzahl von unterschiedlichen Codierungen erzeugt werden. Das Vielfache einer Wartezeit kann insbesondere zwischen 5% und 20% oder 30% der Dauer der gesamten Codierung liegen. Jede der Induktionsheizspulen wird dabei mit einer unterschiedlichen Codierung angesteuert zum Senden bzw. Übertragen von Energie mit dieser Codierung, wobei jede Induktionsheizspule immer wiederkehrend mit derselben Codierung angesteuert wird. Diese Codierung kann bevorzugt fest zu dieser Induktionsheizspule gehören.

Die Steuerung speichert vorteilhaft ab, welches Kochgefäß im Heizbereich welcher Induktionsheizspule angeordnet ist. Dies wird behalten zumindest solange, bis sich daran etwas ändert oder bis die Steuerung und/oder das Induktionskochfeld ausgeschaltet werden. Neu in einem Heizbereich einer Induktionsheizspule angeordnete Kochgefäße erkennt die Steuerung auf dieselbe Art.

Bevorzugt speichert die Steuerung ab, welches Kochgefäß aus einem Heizbereich heraus bewegt wird, was die Steuerung anhand von Veränderungen der Betriebsparameter des Schwingkreises mit der Induktionsheizspule erkennt, also sozusagen mindestens durch die Induktionsheizspule selbst, unter Umständen auch noch durch vorgenannte Topferkennungssensoren.

In Ausgestaltung der Erfindung unterbleibt ein Senden bzw. Übertragen einer Codierung, solange eine Induktionsheizspule nach Erkennen und Zuordnen eines Kochgefäßes zu ihr bzw. zu ihrem Heizbereich keine Veränderung oder Bewegung dieses Kochgefäßes in diesem ihrem Heizbereich registriert. Dieses Registrieren erfolgt vorteilhaft wie vorgenannt durch Erkennen einer Änderung der Betriebsparameter des Schwingkreises mit der Induktionsheizspule. Bevorzugt erfolgt erst dann wieder ein Senden einer Codierung an dieser oder an allen Induktionsheizspulen, wenn eine Veränderung oder Bewegung des Kochgefäßes in ihrem Heizbereich registriert wird, was vorzugsweise durch eine Induktionsheizspule oder eben durch sonstige Sensoren registriert werden kann.

Bevorzugt ist vorgesehen, dass alle Induktionsheizspulen gleichzeitig beginnen, eine Codierung zu übertragen bzw. Energie zu senden. Dadurch kann dieser Vorgang evtl. besser mit dem sonstigen Betrieb des Induktionskochfelds in Einklang gebracht werden.

Erfindungsgemäß weist jede Codierung zuerst einen Ping auf bzw. es wird kurz Energie übertragen zur Synchronisation, was als sogenannter Synchronisations-Ping bezeichnet wird. Er dient dazu, den Zeitablauf an allen Kochgefäßen zu synchronisieren und sie ggf. auf einen bald folgenden weiteren Ping bzw. die Codierung vorzubereiten. Ab diesem Synchronisations-Ping weist jede Induktionsheizspule eine unterschiedliche Codierung auf, damit sie von den anderen unterschieden werden können, damit die Kochgefäße unterschiedliche Signale entsprechend der jeweiligen Codierung senden können.

Vorteilhaft ist vorgesehen, dass innerhalb aller Codierungen nach dem Synchronisations-Ping in zeitlichem Abstand mindestens ein weiterer Ping folgt, wobei dabei bevorzugt die Anzahl der folgenden Pings einer Nummer einer einzelnen Induktionsheizspule bzw. Nummerierung der Induktionsheizspulen entspricht. Besonders vorteilhaft ist innerhalb einer Codierung der zeitliche Abstand zwischen zwei Pings jeweils gleich bis zum letzten Ping vor dem nächsten Synchronisations-Ping.

Alternativ folgt innerhalb aller Codierungen nach dem Synchronisations-Ping in zeitlichem Abstand genau ein weiterer Ping mit einem zeitlichen Abstand, der ein ganzzahliges Vielfaches einer bestimmten definierten Abstandsdauer beträgt. Die Anzahl der ganzzahligen Vielfachen der Abstandsdauer des genau einen weiteren Pings kann einer Nummerierung der Induktionsheizspulen entsprechen, so dass hier nicht die Anzahl der Pings entscheidend ist, sondern ein zeitlicher Abstand zwischen ihnen. Hier kann mit weniger Pings gearbeitet werden. Eine Codierung kann beispielsweise drei Pings aufweisen zusätzlich zu einem Synchronisations-Ping, da die Informationsdichte ja hauptsächlich in der zeitlichen Abfolge liegt.

Als nochmalige weitere Alternative kann vorgesehen sein, dass durch die Codierung eine binäre Zahl übertragen wird. Eine Binär-Unterscheidung wird durch das Senden eines Pings oder keines Pings jeweils an Stellen eines vorgegebenen Zeitrasters vorgenommen, wie dies an sich aus der Signaltechnik bekannt ist. Vorzugsweise wird vor Übertragung der binären Zahl zuerst ein Ping gesendet bzw. kurz Energie übertragen zur Synchronisation bzw. als vorgenannter Synchronisations-Ping. Dies ist hier wiederum wichtig, um die einzelnen Pings besser erkennen zu können.

Innerhalb aller Codierungen kann bevorzugt ein zeitlicher Abstand zwischen zwei aufeinander folgenden Pings ein ganzzahliges Vielfaches einer Abstandsdauer betragen. Die Anzahl der ganzzahligen Vielfachen der Abstandsdauer zwischen zwei aufeinander folgenden Pings entspricht einer Nummer oder Nummerierung der Induktionsheizspulen, wobei insbesondere jede Codierung nur zwei Pings oder drei Pings aufweist, jeweils mit dem bestimmten Abstand zueinander.

In vorteilhafter Ausgestaltung der Erfindung kann vorgesehen sein, dass alle Codierungen (n+1) Pings aufweisen mit (zwei bis n) verschiedenen Abstandsdauern. Damit können n Induktionsheizspulen unterschieden werden. Dabei können dann die Abstandsdauern ausgewertet werden hinsichtlich ihrer Kombination, was die genaue Erkennung der Induktionsheizspule ermöglicht, die diese Codierung gesendet hat.

Vorteilhaft ist grundsätzlich vorgesehen, dass die Sendevorrichtung als Signal eine bereits verarbeitete Information übersendet, insbesondere ist dies direkt die Nummer der Induktionsheizspule, die aus der von einer Induktionsheizspule empfangenen Codierung ausgewertet worden ist.

Eine Auswertung der empfangenen Codierung erfolgt einerseits vorteilhaft in der Sendevorrichtung bzw. in einem integrierten Schaltkreis des Kochgefässes, der wiederum besonders vorteilhaft in oder zusammen mit der Sendevorrichtung ausgebildet ist. Im vorgenannten Fall einer Sendevorrichtung mit Bluetooth bzw. BLE oder Zigbee muss ohnehin ein integrierter Schaltkreis vorgesehen sein. Alternativ kann die Auswertung der Codierung in der Empfangseinrichtung oder in der Steuerung erfolgen.

Bevorzugt ist vorgesehen, dass das Verfahren nur auf Induktionsheizspulen durchgeführt wird, deren Heizbereich überhaupt von einem Kochgefäß bedeckt ist. Andere Induktionsheizspulen können auf dieses Verfahren verzichten und nur einzelne Pings senden bzw. übertragen, die ohnehin für die Erkennung des Vorhandenseins von Kochgefäßen notwendig und auch üblich sind, dies auch ohne Kochgefäß mit Empfangsspule. Das Verfahren kann auch nur auf denjenigen Induktionsheizspulen durchgeführt werden, deren Heizbereich nur genau von einem Kochgefäß überdeckt ist.

Bei sogenannten Flächenkochfeldern ist es möglich, dass ein Kochgefäß den Heizbereich mehrerer Induktionsheizspulen überdeckt. Dadurch empfängt dieses Kochgefäß die Ping-Muster aller Induktionsheizspulen, deren Heizbereiche es überdeckt. Das Kochgefäß muss daher möglicherweise aus einer Überlagerung von verschiedenen Ping-Mustern mehrere Ping-Muster einzelner Induktionsheizspulen erkennen und extrahieren, was möglich ist. Nach Erkennen eines solchen Falls können die erkennenden Induktionsheizspulen ihre Codierungen als Sonderfall auch einmal hintereinander senden.

Die Kochfeldsteuerung eines Flächenkochfeldes ist normalerweise in der Lage zu bestimmen, welche Induktionsheizspule von welchem Kochgefäß überdeckt wird. Daher kann bevorzugt bei einem Kochgefäß, das mehreren Induktionsheizspulen bedeckt, das Verfahren jeweils nur an einer Induktionsheizspule durchgeführt werden, bevorzugt nur auf der am stärksten überdeckten Induktionsheizspule.

Weiterhin kann es möglich sein, dass eine Induktionsheizspule von mehreren Kochgefäßen überdeckt wird. Bevorzugt ist vorgesehen, dass das Verfahren dann nur auf denjenigen Induktionsheizspulen durchgeführt wird, deren Heizbereich nur von einem Kochgefäß überdeckt wird. Werden mehrere festgestellt, so kann das Problem auftreten, dass keine Zuordnung einer Codierung zu nur genau einem einzigen Kochgefäß möglich ist, da zwei im Heizbereich angeordnete Kochgefäße dieselbe Codierung empfangen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Darstellung eines erfindungsgemäßen Induktionskochfelds in einer Anordnung mit einem auf einen Heizbereich einer Induktionsheizspule aufgestellten Kochgefäß samt externem Bediengerät,
- Fig. 2: eine vereinfachte Darstellung der Funktionalitäten des Kochgefäßes mit Intelligenz,
- Fig. 3 bis 8: verschiedene Codierungen.

### DETAILLIERTE BESCHREIBUNG DER AUSFÜHRUNGSBEISPIELE

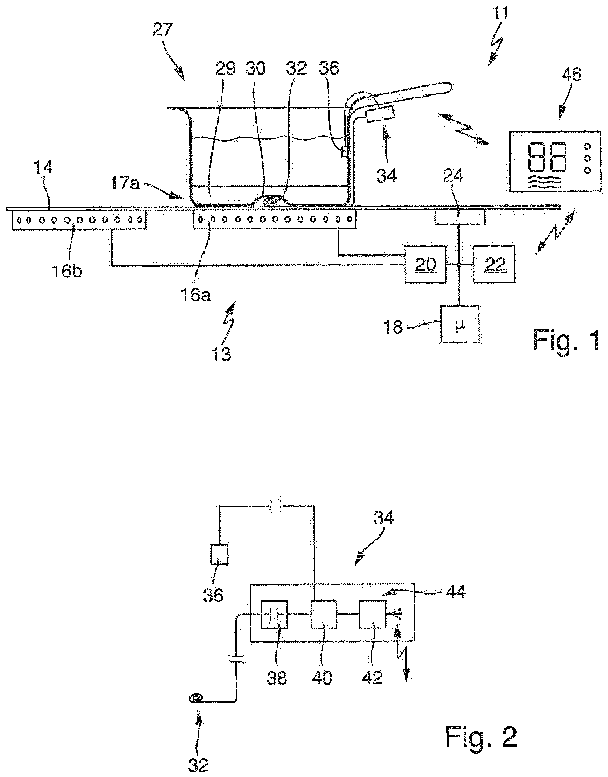

In der Fig. 1 ist eine Anordnung 11 dargestellt mit einem erfindungsgemäßen Induktionskochfeld 13. Das Induktionskochfeld 13 weist eine Kochfeldplatte 14 auf, unter der zwei Induktionsheizspulen 16a und 16b angeordnet sind. In der Praxis sind dies vorteilhaft mehr Induktionsheizspulen 16, beispielsweise vier oder sechs bis zu zwanzig oder dreißig bei vorgenannten Flächenkochfeldern.

Des Weiteren weist das Induktionskochfeld 13 eine Kochfeldsteuerung 18 auf, die mit Funktionseinheiten einer Umrichtervorrichtung 20, einer Sende-/Empfangseinrichtung 22 und einem Bedienmodul 24 an der Unterseite der Kochfeldplatte 14 verbunden ist. Diese Funktionseinheiten sind jeweils wie üblich ausgebildet. Ein Funkstandard für die Sende-/Empfangseinrichtung 22 kann grundsätzlich, wie eingangs erläutert worden ist, vielfältig ausgebildet sein. Vorteilhaft ist es aus den vorgenannten Möglichkeiten Bluetooth bzw. BLE, aber auch ZigBee, WLAN oder ähnliche, sowie proprietäre Lösungen ohne einen allgemeingültigen Standard.

Oberhalb der Induktionsheizspulen 16a und 16b ist jeweils ein Heizbereich gebildet mit einer Fläche, der jeweils in etwa der Fläche der Induktionsheizspulen 16 entspricht. In dem Heizbereich 17a ist ein Kochgefäß 27 angeordnet bzw. dort auf die Oberseite der Kochfeldplatte 14 aufgesetzt. Das Kochgefäß 27 weist in einer Ausnehmung 30 eines Bodens 29 eine Empfangsspule 32 auf. Die Empfangsspule 32 weist wenige Windungen auf und ist derart an der Unterseite des Bodens 29 angeordnet, dass sie freiliegt bzw. vom restlichen Boden nicht gegen das Magnetfeld der Induktionsheizspule 16a abgeschirmt ist. Dies ist wichtig für die zuvor beschriebene Energieübertragung. Die Empfangsspule 32 ist mit einem Kochgefäßmodul 34 verbunden, das in der Fig. 2 in Vergrößerung dargestellt ist.

Rechts ist in Fig. 1 eine externe Bedieneinrichtung 46 dargestellt, die einerseits eine spezielle Bedieneinrichtung für das Induktionskochfeld 13 sein kann, alternativ ein mobiles Endgerät wie ein Tablet-Computer oder ein Smartphone. Die externe Bedieneinrichtung 46 weist eine großflächige Anzeige auf, wie dargestellt ist. Des Weiteren weist sie, wie insbesondere für die genannten mobilen Endgeräte bekannt ist, eine Empfangseinrichtung, eine Sendeeinrichtung und auch einen Prozessor bzw. integrierten Schaltkreis auf. Ein Funkstandard passt hier zu der Sende-/Empfangseinrichtung 22, vorteilhaft also Bluetooth oder BLE. Zu der externen Bedieneinrichtung 46 braucht nicht viel gesagt zu werden, auf ihr kann beispielsweise mittels einer App oder eines speziellen Programms ein eingangs erläutertes Kochprogramm ablaufen. Die dargestellte externe Bedieneinheit ist nicht zwangsläufig erforderlich. Ihre Funktion kann ebenso in einer Bedien- und Steuereinheit integriert sein, die sich innerhalb des Kochfeldes befindet.

In der Fig. 2 ist das Kochgefäßmodul 34 in Vergrößerung dargestellt. Mittels einer elektrischen Verbindung als Kabel odgl. ist das Kochgefäßmodul 34 mit der Empfangsspule 32 verbunden. Auf ähnliche Art und Weise ist das Kochgefäß 34 mit einem Temperatursensor 36 elektrisch leitend verbunden, der außerhalb davon angeordnet ist und vorteilhaft gemäß Fig. 1 im Inneren des Kochgefäßes 27 angeordnet ist, so dass er von darin befindlichem Wasser oder Kochgut umgeben ist und dessen Temperatur bestimmen kann. Dieser Temperatursensor kann ebenso im Boden des Kochgefässes eingelassen sein, wenn nicht die Kochguttemperatur, sondern die Bodentemperatur erfasst werden soll. Anstelle des Temperatursensors 36 sind alternativ oder zusätzlich noch weitere Sensoren wie Drucksensoren, Gewichtssensoren odgl. vorstellbar.

Des Weiteren weist das Kochgefäßmodul 34 einen Energiespeicher 38 auf, der direkt mit der Empfangsspule 32 verbunden ist. Dies kann ein Akkumulator sein, vorteilhaft ist es ein vorgenannter Kondensator, da er keine besonders großen Energiemengen speichern muss, vor allem wenn mit Bluetooth bzw. BLE oder Zigbee gesendet wird, dies aber möglichst schnell und verlustfrei tun sollte.

Im Kochgefäßmodul 34 ist ein integrierter Schaltkreis 40 als eine Art Steuerung vorgesehen, der eben die von der Empfangsspule 32 empfangene Energie bzw. die Signale oder Pings erfasst, vorteilhaft bzgl. Dauer und/oder Abstand und/oder Amplitude bzw. auch aufaddierter und im Energiespeicher 38 abgespeicherte Energie. Der integrierte Schaltkreis 40 steuert eine Sendevorrichtung 42 mit Sendeantenne 44 an, vorteilhaft aufgebaut mit dem vorgenannten Bluetooth- bzw. BLE-Standard oder Zigbee.

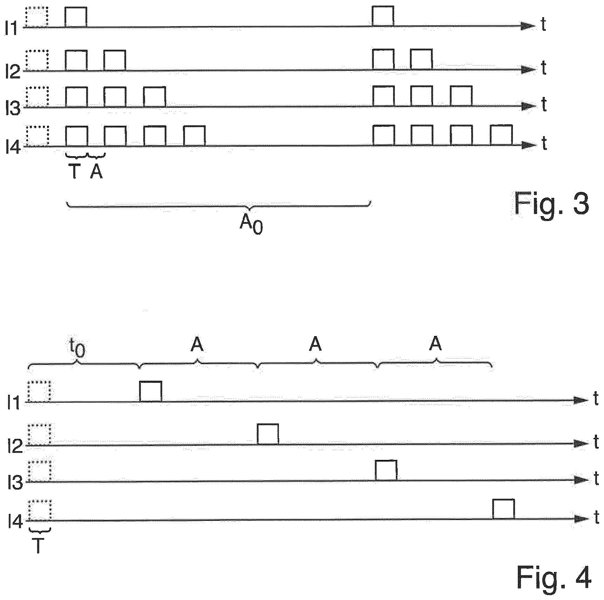

In der Fig. 3 ist ein erstes Beispiel für eine Codierung für beispielhaft vier Induktionsheizspulen I1 bis I4 dargestellt. Zuerst wird erfindungsgemäß gleichzeitig für alle vier Induktionsheizspulen ein gepunktet dargestellter Synchronisations-Ping erzeugt. Vorteilhaft wird ein solcher Synchronisations-Ping sowie auch die weiteren Pings bzw. Pulse auf eingangs genannte Art und Weise erzeugt aus einer Betriebsfrequenz bzw. Resonanzfrequenz des Schwingkreises, in dem sich die jeweilige Induktionsheizspule befindet. Seine Dauer kann im vorgenannten Bereich liegen.

Nach kurzer Zeit wird an allen vier Induktionsheizspulen ein erster Ping mit einer bestimmten Höhe für die Dauer T erzeugt. Bei der Induktionsheizspule I1 wird dann erst wieder nach dem zeitlichen Abstand A₀ der nächste einzelne Ping mit derselben Form erzeugt.

Bei der zweiten Induktionsheizspule I2 wird kurz nach dem ersten Ping, nämlich mit dem zeitlichen Abstand A dazu, ein zweiter Ping mit derselben Form erzeugt. Dann vergeht eine Weile, nämlich (A₀-T-A), bis gleichzeitig mit der ersten Induktionsheizspule I1 wieder ein erster Ping und dann nach kurzem zeitlichen Abstand A ein zweiter Ping erzeugt wird.

Das Muster der Codierungen setzt sich nun ähnlich fort für die dritte Induktionsheizspule I3 und für die vierte Induktionsheizspule I4, wobei drei Pings kurz hintereinander bzw. vier Pings kurz hintereinander, jeweils mit dem selben Abstand A zueinander, erzeugt werden. Durch Abzählen dieser Pings, eventuell nach dem Synchronisations-Ping, kann direkt die Nummer der diese Codierung aussendenden Induktionsheizspulen abgelesen werden. Diese Information kann dann von dem integrierten Schaltkreis 40 derart erkannt werden und in Zusammenarbeit mit der Sendevorrichtung 42 als Information an die externe Bedieneinrichtung 46 gesendet werden. Diese gesendete Information kann dann beispielsweise bereits die ausgewertete Zahl sein, also "1" bzw. "I1" odgl..

Bei dem Muster an Codierungen gemäß Fig. 4 wird an allen vier Induktionsheizspulen I1 bis I4 zur gleichen Zeit ein erster Ping erzeugt mit einer Dauer T. Nach einer Zeit t₀ nach dem ersten Ping wird an der ersten Induktionsheizspule I1 ein zweiter Ping erzeugt. Mit zeitlichem Abstand A später wird an der zweiten Induktionsheizspule I2 der zweite Ping erzeugt, mit nochmals zeitlichem Abstand A dazu wird an der dritten Induktionsheizspule I3 der zweite Ping erzeugt, usw.. Hier kann der zeitliche Abstand t₀ demjenigen A entsprechen, so dass aus Abzählen dieser zeitlichen Abstände bis zum erneuten Einsetzen des Musters der Codierung die Nummer der Induktionsheizspule ausgelesen werden kann.

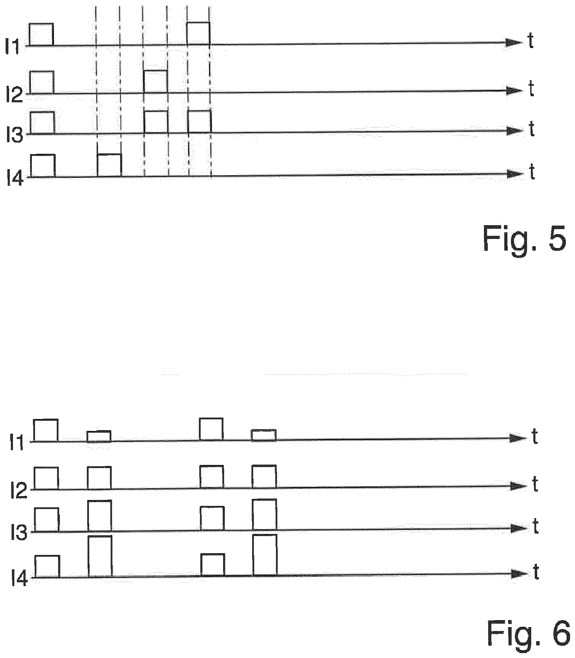

In der Fig. 5 ist für vier Induktionsheizspulen I1 bis I4 dargestellt, wie nach einem ersten Synchronisations-Ping und kurzem Zeitabstand eine binäre Codierung als Angabe über die jeweilige Induktionsheizspule übersandt wird. Die erste Induktionsheizspule I1 sendet dabei eine "1" als Binärcode. Die zweite Induktionsheizspule I2 sendet eine "2" als Binärcode usw., so sendet jede Induktionsheizspule ihre eigene Ziffer bzw. Nummer als Binärcode. Durch Einordnen der jeweiligen Pings im gepunktet dargestellten Raster für den Binärcode kann dieses leicht erreicht werden und grundsätzlich für sehr viele Induktionsheizspulen gemacht werden. Anstelle eines Binärcodes kann hier auch ein anderer Code verwendet werden.

In der Fig. 6 ist eine Möglichkeit dargestellt, wie bei vier Induktionsheizspulen I1 bis I4 eine Unterscheidung jeweils nach einem gleichzeitig für alle Induktionsheizspulen gesendeten Synchronisations-Ping mit einer Amplitude eines nachfolgend gesendeten Pings erzeugt werden kann. Die Amplitude steigt dabei schrittweise an mit der höheren Nummer der Induktionsheizspule. Die Pings mit unterschiedlicher Amplitude werden hier gleichzeitig gesendet, sie können aber natürlich auch zeitversetzt gesendet werden.

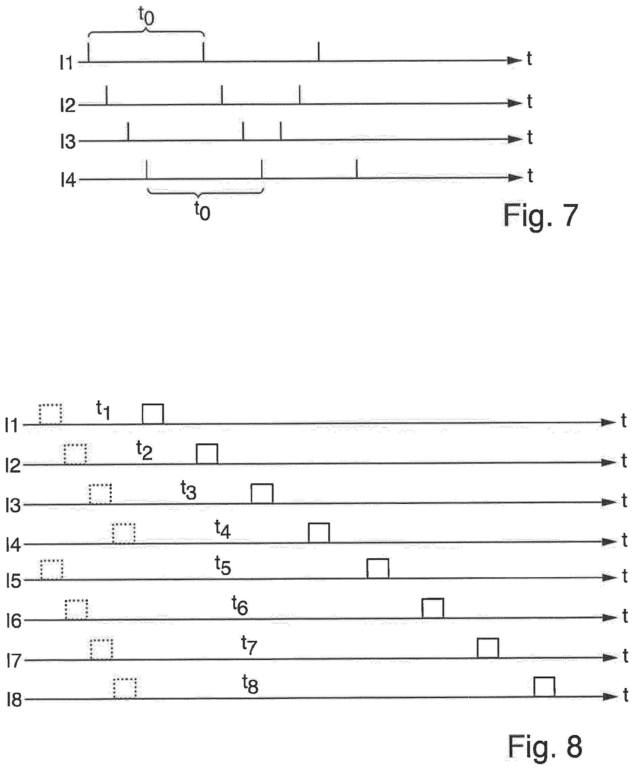

In der Fig. 7 ist für vier Induktionsheizspulen I1 bis I4 dargestellt, wie sehr kurze Pings verwendet werden können. Zur Unterscheidung der einzelnen Induktionsheizspulen mittels drei gesendeten Pings wird der Abstand zwischen zweitem Ping und drittem Ping jeweils variiert. Dies ist leicht aus Fig. 7 zu ersehen.

Bei Fig. 8 ist für acht Induktionsheizspulen I1 bis I8 dargestellt, wie für zwei Gruppen von Induktionsheizspulen, nämlich I1 bis I4 einerseits und I5 bis I8 andererseits, ein erster Ping jeweils mit zwei Induktionsheizspulen gleichzeitig sendet wird. Der zeitliche Abstand zum nachfolgenden zweiten Ping, der von t1 bis t8 variiert, ergibt die Nummer der diese Codierung sendenden Induktionsheizspule.

Anhand der gesendeten Codierung der jeweiligen Induktionsheizspule kann im Kochgefäß 27 die Nummer der Induktionsheizspule, über der sich das Kochgefäß 27 befindet bzw. deren Codierung im Heizbereich empfangen werden kann, der externen Bedieneinrichtung 46, ggf. ebenso aber auch der Kochfeldsteuerung 18, mitgeteilt werden. Dann kann eine sichere Zuordnung von genau diesem Kochgefäß 27 zu genau diesem Heizbereich dieser Induktionsheizspule erfolgen, was sehr wichtig ist. Da das Kochgefäß 27 ja auch noch die weiteren Sensoren aufweist, kann ein exakt ablaufendes Kochprogramm odgl. auf bekannte Art und Weise durchgeführt werden.

## Patentansprüche

1. Verfahren zum Betrieb eines Induktionskochfelds (13) mit mehreren Induktionsheizspulen (16), wobei:
- jede Induktionsheizspule (16) einen Heizbereich (17) aufweist,
- ein Kochgefäß (27) mindestens einen Heizbereich (17) überdeckend angeordnet werden kann,
- jede Induktionsheizspule (16) zum Senden bzw. Übertragen von Energie ausgebildet ist zum Beheizen eines Kochgefäßes (27) und dazu von einem Umrichter (20) angesteuert wird,
- jedes Kochgefäß (27) eine Sendevorrichtung (42) mit Sendeantenne (44) zum Senden eines Signals aufweist in Abhängigkeit von empfangener Energie von einer Induktionsheizspule (16), deren Heizbereich (17) das Kochgefäß (27) zumindest teilweise überdeckt,
- eine Empfangseinrichtung (22) vorgesehen ist zum Empfangen von Signalen einer Sendevorrichtung (42) eines Kochgefäßes (27) bzw. aller Sendevorrichtungen (42) von Kochgefäßen (27) auf dem Induktionskochfeld (13),
- eine Steuerung (18) vorgesehen ist, die die Signale von der Empfangseinrichtung (22) erhält und die Informationen zu einem Senden bzw. Übertragen von Energie der Induktionsheizspulen (16) aufweist oder erhält,
wobei das Verfahren die folgenden Schritte aufweist:
- mindestens ein Kochgefäß (27) wird über einem Heizbereich (17) einer Induktionsheizspule (16) angeordnet,
- eine Vielzahl der Induktionsheizspulen (16) werden angesteuert zum Senden bzw. Übertragen von Energie in einem Muster, wobei dabei Dauer und/oder Amplitude variiert werden als Codierung, wobei die Codierung darin besteht, dass
∘ die Amplitude der gesendeten bzw. übertragenen Energie innerhalb der Codierung über der Zeit variiert, insbesondere zwischen Null und einem Codier-Maximalwert variiert, und/oder
∘ die Dauer der Energieübertragung variiert, und/oder
∘ die Dauer zwischen zwei Energieübertragungen variiert, und/oder
∘ die Anzahl der Energieübertragungen variiert,
- überdeckt ein Kochgefäß (27) einen Heizbereich (17) einer Induktionsheizspule (16), die Energie mit einer bestimmten Codierung übertragen hat, so sendet die Sendevorrichtung (42) an die Empfangseinrichtung (22) ein Signal oder eine Abfolge mehrerer Signale, die eindeutig von dieser Codierung abhängen und/oder die zu genau dieser Codierung zuordenbar sind,
- die Steuerung (18) erhält die von der Empfangseinrichtung (22) empfangenen Signale und vergleicht diese mit Informationen über die von den Induktionsheizspulen (16) gesendeten bzw. übertragenen Energie als Codierungen, um zu ermitteln, welche Codierung von übertragener Energie von einer bestimmten Induktionsheizspule (16) zu einem empfangenen Signal oder einer Abfolge mehrerer Signale passt, um darauf aufbauend eine Zuordnung des dieses Signal oder diese Abfolge mehrerer Signale sendenden Kochgefäßes (27) zu dem Heizbereich (17) bzw. zu der zu dem Heizbereich (17) zugehörigen Induktionsheizspule (16) vorzunehmen,
**dadurch gekennzeichnet, dass** jede Codierung zuerst einen Ping aufweist bzw. kurz Energie übertragen wird zur Synchronisation, und ab diesem Synchronisations-Ping jede Induktionsheizspule (16) eine unterschiedliche Codierung aufweist.

2. Verfahren nach Anspruch 1, **dadurch gekennzeichnet, dass** ein Kochgefäß (27) eine Empfangsspule (32) aufweist, um ein zum Übertragen von Energie genutztes magnetisches Wechselfeld einer Induktionsheizspule (16) als elektrische Energie speichert um mittels der Sendeantenne der Sendevorrichtung (42) das Signal auszusenden, wobei vorzugsweise im Kochgefäß (27) ein Energiespeicher (38) vorgesehen ist, der mit der Empfangsspule (32) verbunden ist, wobei die von der Empfangsspule (32) empfangene Energie in dem Energiespeicher (38) gespeichert wird und wobei entsprechend der gespeicherten Energie ein Signal oder eine Abfolge mehrerer Signale von der Sendevorrichtung (42) ausgesendet wird, wobei insbesondere das Verfahren nur dann durchgeführt wird, wenn ein Kochgefäß (27) mit Empfangsspule (32) und mit Sendevorrichtung (42) auf dem Induktionskochfeld (13) entdeckt worden ist, wobei das Kochgefäß (27) auch noch einen integrierten Schaltkreis (40) und mindestens einen Sensor (36) aufweist..

3. Verfahren nach Anspruch 1 oder 2, **dadurch gekennzeichnet, dass** die von der Empfangsspule (32) empfangene Energie direkt zur elektrischen Ansteuerung der Sendeantenne (44) genutzt wird zum Senden eines Signals oder einer Abfolge mehrerer Signale, wobei die Länge und/oder Stärke des mindestens einen Signals der Varianz von Dauer und/oder Amplitude der Codierung entspricht, wobei vorzugsweise die Sendeantenne (44) ein Signal sendet, sobald an die Empfangsspule (32) Energie von einer Induktionsheizspule (16) übertragen wird, deren Heizbereich (17) überdeckend das Kochgefäß (27) angeordnet ist, wobei die Sendevorrichtung (42) solange ein Signal sendet wie Energie von der Induktionsheizspule (16) an die Empfangsspule (32) übertragen wird, und wobei die Sendevorrichtung (42) kein Signal mehr sendet, sobald an die Empfangsspule (32) keine Energie mehr von der Induktionsheizspule (16) übertragen wird.

4. Verfahren nach einem der vorhergehenden Ansprüche, **dadurch gekennzeichnet, dass** das Senden bzw. Übertragen von Energie bei Induktionsheizspulen (16), bei denen nicht bekannt ist, dass oder ob ihr Heizbereich (17) von einem Kochgefäß (27) überdeckt ist, zur Erkennung von im Heizbereich (17) angeordneten Kochgefäßen (27) häufig und/oder regelmäßig wiederholt wird, insbesondere mit einer Häufigkeit oder Wiederholfrequenz von weniger als 1 min, insbesondere weniger als 5 sec.

5. Verfahren nach einem der vorhergehenden Ansprüche, **dadurch gekennzeichnet, dass** eine Codierung aus Pings bzw. Pulsen besteht, die mit einer Betriebsfrequenz oder der Resonanzfrequenz eines Schwingkreises mit der Induktionsheizspule (16) schwingen, wobei ein Ping bzw. ein Puls eine oder mehrere Schwingungen aufweist, vorzugsweise mit einer Gesamtdauer zwischen 1 µsec und 500 µsec, wobei insbesondere ein Abstand zwischen zwei Pings bzw. Pulsen innerhalb einer Codierung eine Dauer einer Netzhalbwelle des Versorgungsnetzes, oder ein Vielfaches davon beträgt.

6. Verfahren nach einem der vorhergehenden Ansprüche, **dadurch gekennzeichnet, dass** die Empfangseinrichtung (22) und die Steuerung (18) außerhalb des Induktionskochfelds (13) angeordnet sind, vorzugsweise in einer externen Bedieneinrichtung (46), wobei insbesondere die externe Bedieneinrichtung (46) Bedienelemente und mindestens eine Anzeigeeinrichtung aufweist.

7. Verfahren nach einem der vorhergehenden Ansprüche, **dadurch gekennzeichnet, dass** ein Kochgefäß (27) neben der Empfangsspule (32) und der Sendevorrichtung (42) noch einen integrierten Schaltkreis (40) aufweist, vorzugsweise auch noch mindestens einen Sensor wie Temperatursensor (36) oder Drucksensor aufweist, insbesondere einen Energiespeicher (38) wie Batterie, Akkumulator oder Kondensator aufweist.

8. Verfahren nach einem der vorhergehenden Ansprüche, **dadurch gekennzeichnet, dass** bei einer Ansteuerung aller Induktionsheizspulen (16) zum Übertragen von Energie zur Erkennung von im Heizbereich (17) angeordneten Kochgefäßen (27) zuerst für eine kurze Zeit Energie übertragen wird als Ping, dann pausiert wird, und dann über eine variierende Anzahl von kurzen Abfolgen von Übertragen von Energie und Pausieren oder durch Abwarten eines bestimmten Vielfachen einer Wartezeit, die insbesondere zwischen 5% und 20% der Dauer der Codierungen liegt, eine Vielzahl von unterschiedlichen Codierungen erzeugt wird und jede der Induktionsheizspulen (16) mit einer unterschiedlichen Codierung, jede Induktionsheizspule (16) aber immer wiederkehrend mit derselben Codierung, angesteuert wird zum Senden bzw. Übertragen von Energie mit dieser Codierung.

9. Verfahren nach einem der vorhergehenden Ansprüche, **dadurch gekennzeichnet, dass** ein Senden bzw. Übertragen einer Codierung unterbleibt, solange eine Induktionsheizspule (16) nach Erkennen und Zuordnen eines Kochgefäßes (27) keine Veränderung oder Bewegung dieses Kochgefäßes (27) in ihrem Heizbereich (17) registriert durch Änderung der Betriebsparameter des Schwingkreises mit der Induktionsheizspule (16), wobei erst dann wieder ein Senden einer Codierung an dieser oder an allen Induktionsheizspulen (16) erfolgt, wenn eine Veränderung oder Bewegung des Kochgefäßes (27) in ihrem Heizbereich (17) registriert wird, vorzugsweise durch eine Induktionsheizspule (16) oder durch sonstige Sensoren registriert wird.

10. Verfahren nach einem der vorhergehenden Ansprüche, **dadurch gekennzeichnet, dass** alle Induktionsheizspulen (16) gleichzeitig beginnen, eine Codierung zu übertragen als Senden von Energie.

11. Verfahren nach einem der vorhergehenden Ansprüche, **dadurch gekennzeichnet, dass** innerhalb aller Codierungen nach dem Synchronisations-Ping in zeitlichem Abstand mindestens ein weiterer Ping folgt und die Anzahl der folgenden Pings einer Nummerierung der Induktionsheizspulen (16) entspricht, wobei vorzugsweise innerhalb einer Codierung der zeitliche Abstand jeweils gleich ist bis zum letzten Ping vor dem nächsten Synchronisations-Ping.

12. Verfahren nach einem der Ansprüche 1 bis 10, **dadurch gekennzeichnet, dass** innerhalb aller Codierungen nach dem Synchronisations-Ping in zeitlichem Abstand genau ein weiterer Ping folgt mit einem zeitlichen Abstand, der ein ganzzahliges Vielfaches einer Abstandsdauer beträgt, wobei vorzugsweise die Anzahl der ganzzahligen Vielfachen der Abstandsdauer des genau einen weiteren Pings einer Nummerierung der Induktionsheizspulen (16) entspricht.

13. Verfahren nach einem der Ansprüche 1 bis 11, **dadurch gekennzeichnet, dass** durch die Codierung eine binäre Zahl übertragen wird, wobei die Binär-Unterscheidung durch das Senden eines Pings oder keines Pings jeweils an Stellen eines vorgegebenen Zeitrasters vorgenommen wird, wobei vorzugsweise vor Übertragung der binären Zahl zuerst ein Ping gesendet wird bzw. kurz Energie übertragen wird zur Synchronisation bzw. als Synchronisations-Ping.

14. Verfahren nach einem der vorhergehenden Ansprüche, **dadurch gekennzeichnet, dass** innerhalb aller Codierungen ein zeitlicher Abstand zwischen zwei aufeinander folgenden Pings ein ganzzahliges Vielfaches einer Abstandsdauer beträgt, wobei vorzugsweise die Anzahl der ganzzahligen Vielfachen der Abstandsdauer zwischen zwei aufeinander folgenden Pings einer Nummerierung der Induktionsheizspulen (16) entspricht, wobei insbesondere jede Codierung nur zwei Pings aufweist, wobei vorzugsweise alle Codierungen (n+1) Pings aufweisen mit (zwei bis n) verschiedenen Abstandsdauern, wobei die Abstandsdauern ausgewertet werden hinsichtlich ihrer Kombination.

15. Verfahren nach einem der vorhergehenden Ansprüche, **dadurch gekennzeichnet, dass** die Sendevorrichtung (42) eine verarbeitete Information übersendet, insbesondere direkt die Nummer der Induktionsheizspule (16), die aus der von einer Induktionsheizspule (16) empfangenen Codierung ausgewertet worden ist, wobei vorzugsweise die Auswertung in der Sendevorrichtung (42) erfolgt.

16. Induktionskochfeld (13) zur Durchführung des Verfahrens nach einem der vorhergehenden Ansprüche, wobei das Induktionskochfeld (13) mehrere Induktionsheizspulen (16) aufweist, wobei jeder Induktionsheizspule (16) mindestens ein Heizbereich (17) zugeordnet ist.

## Claims

1. Method for operating an induction hob (13) having a plurality of induction heating coils (16), wherein:
- each induction heating coil (16) has a heating region (17),
- a cooking vessel (27) can be arranged covering at least one heating region (17),
- each induction heating coil (16) is designed for transmitting or transferring energy for heating a cooking vessel (27) and is controlled by an inverter (20) for this purpose,
- each cooking vessel (27) has a transmitting device (42) with a transmitting antenna (44) for transmitting a signal as a function of energy received from an induction heating coil (16), the heating region (17) of which at least partially covers the cooking vessel (27),
- a receiving device (22) is provided for receiving signals from a transmitting device (42) of a cooking vessel (27) or all transmitting devices (42) of cooking vessels (27) on the induction hob (13),
- a controller (18) is provided which receives the signals from the receiving device (22) and which has or receives the information for transmitting or transferring energy from the induction heating coils (16),
wherein the method comprises the following steps:
- at least one cooking vessel (27) is disposed over a heating region (17) of an induction heating coil (16),
- a plurality of the induction heating coils (16) are driven to transmit energy in a pattern, wherein duration and/or amplitude are varied as coding, the coding being that
∘ the amplitude of the transmitted or transferred energy varies over time within the coding, in particular varies between zero and a maximum coding value, and/or
∘ the duration of the energy transmission varies, and/or
∘ the duration between two energy transmissions varies, and/or
∘ the number of energy transfers varies,
- a cooking vessel (27) covers a heating region (17) of an induction heating coil (16) which has transmitted energy with a specific coding, the transmitting device (42) transmits to the receiving device (22) a signal or a sequence of several signals which are clearly dependent on this coding and/or which can be assigned to precisely this coding,
- the controller (18) receives the signals received by the receiving device (22) and compares them with information about the energy emitted or transmitted by the induction heating coils (16) as codes in order to transmitted by the induction heating coils (16) as codes in order to determine which code of transmitted energy from a specific induction heating coil (16) matches a received signal or a sequence of a plurality of signals in order, on this basis, to make an assignment of the cooking vessel (27) transmitting this signal or this sequence of a plurality of signals to the heating region (17) or to the induction heating coil (16) associated with the heating region (17),
**characterized in that** each coding first has a ping or energy is briefly transmitted for synchronization, and from this synchronization ping each induction heating coil (16) has a different coding.

2. Method according to claim 1, **characterized in that** a cooking vessel (27) has a receiving coil (32) for storing an alternating magnetic field of an induction heating coil (16) used for transmitting energy as electrical energy in order to emit the signal by means of the transmitting antenna of the transmitting device (42), an energy storage device (38) being preferably provided in the cooking vessel (27), which is connected to the receiving coil (32), wherein the energy received by the receiving coil (32) is stored in the energy storage device (38) and wherein a signal or a sequence of a plurality of signals is emitted by the transmitting device (42) in accordance with the stored energy, wherein in particular the method is only carried out when a cooking vessel (27) with receiving coil (32) and with transmitting device (42) has been detected on the induction hob (13), wherein the cooking vessel (27) also has an integrated circuit (40) and at least one sensor (36).

3. Method according to claim 1 or 2, **characterized in that** the energy received by the receiving coil (32) is used directly to electrically drive the transmitting antenna (44) to transmit a signal or a sequence of several signals, the length and/or strength of the at least one signal corresponding to the variance of duration and/or amplitude of the coding, preferably the transmitting antenna (44) transmitting a signal, as soon as energy is transmitted to the receiving coil (32) from an induction heating coil (16) whose heating region (17) is arranged covering the cooking vessel (27), wherein the transmitting device (42) transmits a signal as long as energy is transmitted from the induction heating coil (16) to the receiving coil (32), and wherein the transmitting device (42) no longer transmits a signal as soon as no more energy is transmitted to the receiving coil (32) from the induction heating coil (16).

4. Method according to one of the preceding claims, **characterized in that** the transmission or transfer of energy in the case of induction heating coils (16) in which it is not known that or whether their heating region (17) is covered by a cooking vessel (27) is repeated frequently and/or regularly in order to detect cooking vessels (27) arranged in the heating region (17), in particular with a frequency or repetition frequency of less than 1 min, in particular less than 5 sec.

5. Method according to one of the preceding claims, **characterized in that** a coding consists of pings or pulses which oscillate at an operating frequency or the resonant frequency of an oscillating circuit with the induction heating coil (16), a ping or a pulse having one or more oscillations, preferably with a total duration of between 1 µsec and 500 µsec, in particular a distance between two pings or pulses within a coding being a duration of a mains half-wave of the supply mains, or a multiple thereof.

6. Method according to one of the preceding claims, **characterized in that** the receiving device (22) and the controller (18) are arranged outside the induction hob (13), preferably in an external operating device (46), in particular the external operating device (46) having operating elements and at least one display device.

7. Method according to one of the preceding claims, **characterized in that** a cooking vessel (27), in addition to the receiving coil (32) and the transmitting device (42), also has an integrated circuit (40), preferably also has at least one sensor such as a temperature sensor (36) or pressure sensor, in particular has an energy storage device (38) such as a battery, accumulator or capacitor.

8. Method according to one of the preceding claims, **characterized in that**, when all induction heating coils (16) for transferring energy for detecting cooking vessels (27) arranged in the heating region (17) are activated, energy is first transferred for a short time as a ping, then paused, and then transferred via a varying number of short sequences of transferring energy and pausing or by waiting for a specific multiple of a waiting time, which is in particular between 5% and 20% of the duration of the encodings, a plurality of different encodings is generated and each of the induction heating coils (16) is controlled with a different encoding, but each induction heating coil (16) is controlled repeatedly with the same encoding, for transmitting or transferring energy with this coding.

9. Method according to one of the preceding claims, **characterized in that** a transmission or transfer of a coding is omitted as long as an induction heating coil (16), after recognizing and assigning a cooking vessel (27), does not register any change or movement of this cooking vessel (27) in its heating region (17) by changing the operating parameters of the oscillating circuit with the induction heating coil (16), wherein a coding is only transmitted again to this or all induction heating coils (16) when a change or movement of the cooking vessel (27) in its heating region (17) is registered, preferably by an induction heating coil (16) or by other sensors.

10. Method according to one of the preceding claims, **characterized in that** all induction heating coils (16) simultaneously start to transmit an encoding as sensing energy.

11. Method according to one of the preceding claims, **characterized in that** at least one further ping follows at a time interval within all coding after the synchronization ping and the number of subsequent pings corresponds to a numbering of the induction heating coils (16), the time interval preferably being the same within a coding in each case until the last ping before the next synchronization ping.

12. Method according to one of claims 1 to 10, **characterized in that**, within all encodings, the synchronization ping is followed at a time interval by exactly one further ping with a time interval which is an integer multiple of a spacing duration, the number of integer multiples of the spacing duration of the exactly one further ping preferably corresponding to a numbering of the induction heating coils (16).

13. Method according to one of claims 1 to 11, **characterized in that** a binary number is transmitted by the coding, the binary differentiation being made by transmitting a ping or no ping in each case at positions of a predetermined time grid, a ping preferably being transmitted first before transmission of the binary number or energy being transmitted briefly for synchronization or as a synchronization ping.

14. Method according to one of the preceding claims, **characterized in that** within all encodings, a time interval between two successive pings is an integer multiple of a distance duration, the number of integer multiples of the distance duration between two successive pings preferably corresponding to a numbering of the induction heating coils (16), wherein in particular each coding has only two pings, wherein preferably all codings have (n+1) pings with (two to n) different spacing durations, wherein the spacing durations are evaluated with respect to their combination.

15. Method according to one of the preceding claims, **characterized in that** the transmitting device (42) transmits processed information, in particular directly the number of the induction heating coil (16), which has been evaluated from the coding received from an induction heating coil (16), the evaluation preferably taking place in the transmitting device (42).

16. Induction hob (13) for carrying out the method according to one of the preceding claims, wherein the induction hob (13) has a plurality of induction heating coils (16), wherein at least one heating region (17) is assigned to each induction heating coil (16).

## Revendications

1. Procédé de fonctionnement d'une table de cuisson à induction (13) avec plusieurs bobines de chauffage à induction (16), dans lequel :
- chaque bobine de chauffage par induction (16) présente une zone de chauffage (17),
- un récipient de cuisson (27) peut être disposé de manière à recouvrir au moins une zone de chauffage (17),
- chaque bobine de chauffage par induction (16) est conçue pour émettre ou transmettre de l'énergie afin de chauffer un récipient de cuisson (27) et est commandée à cet effet par un convertisseur (20),
- chaque récipient de cuisson (27) présente un dispositif d'émission (42) avec une antenne d'émission (44) pour émettre un signal en fonction de l'énergie reçue d'une bobine de chauffage par induction (16), dont la zone de chauffage (17) recouvre au moins partiellement le récipient de cuisson (27),
- un dispositif de réception (22) est prévu pour recevoir des signaux d'un dispositif d'émission (42) d'un récipient de cuisson (27) ou de tous les dispositifs d'émission (42) de récipients de cuisson (27) sur la plaque de cuisson à induction (13),
- une commande (18) est prévue, qui reçoit les signaux du dispositif de réception (22) et qui présente ou obtient les informations pour une émission ou une transmission d'énergie des bobines de chauffage par induction (16),
le procédé comprenant les étapes suivantes :
- au moins un récipient de cuisson (27) est placé au-dessus d'une zone de chauffage (17) d'une bobine de chauffage par induction (16),
- une pluralité de bobines de chauffage par induction (16) sont commandées pour émettre ou transmettre de l'énergie selon un modèle, en faisant varier la durée et/ou l'amplitude en tant que codage, le codage consistant en ce que
∘ l'amplitude de l'énergie émise ou transmise varie dans le temps à l'intérieur du codage, en particulier entre zéro et une valeur maximale de codage, et/ou que
∘ la durée de la transmission d'énergie varie, et/ou
∘ la durée entre deux transmissions d'énergie varie, et/ou
∘ le nombre de transferts d'énergie varie,
- si un récipient de cuisson (27) recouvre une zone de chauffage (17) d'une bobine de chauffage par induction (16) qui a transmis de l'énergie avec un codage déterminé, le dispositif d'émission (42) envoie au dispositif de réception (22) un signal ou une séquence de plusieurs signaux qui dépendent clairement de ce codage et/ou qui peuvent être attribués à ce codage précis,
- la commande (18) reçoit les signaux reçus par le dispositif de réception (22) et les compare à des informations sur l'énergie émise ou reçue par les bobines de chauffage par induction (16), afin de déterminer quel codage d'énergie transmise par une bobine de chauffage par induction (16) déterminée correspond à un signal reçu ou à une séquence de plusieurs signaux, afin de procéder sur cette base à une affectation du récipient de cuisson (27) émettant ce signal ou cette séquence de plusieurs signaux à la zone de chauffage (17) ou à la bobine de chauffage par induction (16) associée à la zone de chauffage (17),
**caractérisé en ce que** chaque codage présente d'abord un ping ou que de l'énergie est brièvement transmise pour la synchronisation, et qu'à partir de ce ping de synchronisation, chaque bobine de chauffage par induction (16) présente un codage différent.

2. Procédé selon la revendication 1, **caractérisé en ce qu'**un récipient de cuisson (27) présente une bobine de réception (32) pour stocker sous forme d'énergie électrique un champ magnétique alternatif d'une bobine de chauffage par induction (16) utilisé pour la transmission d'énergie, afin d'émettre le signal au moyen de l'antenne d'émission du dispositif d'émission (42), un accumulateur d'énergie (38) étant de préférence prévu dans le récipient de cuisson (27), lequel est relié à la bobine de réception (32), l'énergie reçue par la bobine de réception (32) est stockée dans l'accumulateur d'énergie (38) et, en fonction de l'énergie stockée, un signal ou une séquence de plusieurs signaux est émis par le dispositif d'émission (42), le procédé n'étant notamment mis en oeuvre que lorsqu'un récipient de cuisson (27) avec bobine de réception (32) et avec dispositif d'émission (42) a été détecté sur la plaque de cuisson à induction (13), le récipient de cuisson (27) comportant également un circuit intégré (40) et au moins un capteur (36).

3. Procédé selon la revendication 1 ou 2, **caractérisé en ce que** l'énergie reçue par la bobine réceptrice (32) est utilisée directement pour commander électriquement l'antenne émettrice (44) afin d'émettre un signal ou une séquence de signaux, la longueur et/ou l'intensité dudit au moins un signal correspondant à la variance de la durée et/ou de l'amplitude du codage, de préférence l'antenne émettrice (44) émettant un signal, dès que de l'énergie est transmise à la bobine de réception (32) par une bobine de chauffage par induction (16) dont la zone de chauffage (17) est disposée de manière à recouvrir le récipient de cuisson (27), le dispositif d'émission (42) émettant un signal tant que de l'énergie est transmise de la bobine de chauffage par induction (16) à la bobine de réception (32), et le dispositif d'émission (42) n'émettant plus de signal dès que de l'énergie n'est plus transmise à la bobine de réception (32) par la bobine de chauffage par induction (16).

4. Procédé selon l'une des revendications précédentes, **caractérisé en ce que**, pour les bobines de chauffage par induction (16) dont on ne sait pas si ou si leur zone de chauffage (17) est recouverte par un récipient de cuisson (27), l'émission ou la transmission d'énergie est répétée fréquemment et/ou régulièrement pour identifier les récipients de cuisson (27) disposés dans la zone de chauffage (17), notamment avec une fréquence ou une fréquence de répétition inférieure à 1 minute, en particulier inférieure à 5 secondes.

5. Procédé selon l'une des revendications précédentes, **caractérisé en ce qu'**un codage est constitué de pings ou d'impulsions oscillant à une fréquence de fonctionnement ou à la fréquence de résonance d'un circuit oscillant avec la bobine de chauffage par induction (16), un ping ou une impulsion présentant une ou plusieurs oscillations, de préférence d'une durée totale comprise entre 1 µsec et 500 µsec, un intervalle entre deux pings ou impulsions à l'intérieur d'un codage étant notamment d'une durée égale à une demionde du réseau d'alimentation, ou à un multiple de celle-ci.

6. Procédé selon l'une des revendications précédentes, **caractérisé en ce que** le dispositif de réception (22) et la commande (18) sont disposés à l'extérieur de la table de cuisson à induction (13), de préférence dans un dispositif de commande externe (46), le dispositif de commande externe (46) présentant en particulier des éléments de commande et au moins un dispositif d'affichage.

7. Procédé selon l'une des revendications précédentes, **caractérisé en ce qu'**un récipient de cuisson (27) présente, outre la bobine de réception (32) et le dispositif d'émission (42), encore un circuit intégré (40), de préférence présente également au moins un capteur tel qu'un capteur de température (36) ou un capteur de pression, en particulier présente un accumulateur d'énergie (38) tel qu'une pile, un accumulateur ou un condensateur.

8. Procédé selon l'une des revendications précédentes, **caractérisé en ce que**, lors d'une commande de toutes les bobines de chauffage par induction (16) pour transmettre de l'énergie afin de détecter des récipients de cuisson (27) disposés dans la zone de chauffage (17), de l'énergie est d'abord transmise pendant une courte durée sous la forme d'un ping, puis est mise en pause, et est ensuite transmise par un nombre variable de courtes séquences de transmission d'énergie et de mise en pause ou en attendant un multiple déterminé d'un temps d'attente, qui est notamment compris entre 5% et 20% de la durée des codages, une pluralité de codages différents est générée et chacune des bobines de chauffage par induction (16) est commandée avec un codage différent, mais chaque bobine de chauffage par induction (16) est commandée de manière répétitive avec le même codage, pour émettre ou transmettre de l'énergie avec ce codage.

9. Procédé selon l'une des revendications précédentes, **caractérisé en ce que** l'émission ou la transmission d'un code est supprimée tant qu'une bobine de chauffage par induction (16), après avoir détecté et affecté un récipient de cuisson (27), n'enregistre pas de modification ou de mouvement de ce récipient de cuisson (27) dans sa zone de chauffage (17) par modification des paramètres de fonctionnement du circuit oscillant avec la bobine de chauffage par induction (16), il n'y a pas de transmission d'un code, un codage n'étant à nouveau envoyé à la bobine de chauffage par induction (16) ou à toutes les bobines de chauffage par induction (16) que lorsqu'une modification ou un mouvement du récipient de cuisson (27) dans sa zone de chauffage (17) est enregistré, de préférence par une bobine de chauffage par induction (16) ou par d'autres capteurs.

10. Procédé selon l'une des revendications précédentes, **caractérisé en ce que** toutes les bobines de chauffage par induction (16) commencent à transmettre simultanément un code en tant que détection d'énergie.

11. Procédé selon l'une des revendications précédentes, **caractérisé en ce que**, dans tous les codages, le ping de synchronisation est suivi d'au moins un autre ping à un certain intervalle de temps et le nombre de pings suivants correspond à une numérotation des bobines de chauffage par induction (16), l'intervalle de temps étant de préférence le même dans un codage jusqu'au dernier ping avant le ping de synchronisation suivant.

12. Procédé selon l'une des revendications 1 à 10, **caractérisé en ce qu'**à l'intérieur de tous les codages, le ping de synchronisation est suivi d'exactement un autre ping à un intervalle de temps qui est un multiple entier d'une durée d'intervalle, le nombre de multiples entiers de la durée d'intervalle de l'exactement un autre ping correspondant de préférence à une numérotation des bobines de chauffage par induction (16).

13. Procédé selon l'une des revendications 1 à 11, **caractérisé en ce qu'**un nombre binaire est transmis par le codage, la distinction binaire étant effectuée par l'envoi d'un ping ou d'aucun ping respectivement à des endroits d'une trame temporelle prédéfinie, un ping étant de préférence d'abord envoyé avant la transmission du nombre binaire ou une énergie étant brièvement transmise pour la synchronisation ou comme ping de synchronisation.

14. Procédé selon l'une des revendications précédentes, **caractérisé en ce que**, dans tous les codages, un intervalle de temps entre deux pings successifs est un multiple entier d'une durée d'intervalle, de préférence le nombre de multiples entiers de la durée d'intervalle entre deux pings successifs correspondant à une numérotation des bobines de chauffage par induction (16), chaque codage ne comportant en particulier que deux pings, tous les cycles de codage comportant de préférence (n+1) pings avec (deux à n) durées d'espacement différentes, les durées d'espacement étant évaluées en fonction de leur combinaison.

15. Procédé selon l'une des revendications précédentes, **caractérisé en ce que** le dispositif d'émission (42) transmet une information traitée, notamment directement le numéro de la bobine de chauffage par induction (16) évalué à partir du codage reçu par une bobine de chauffage par induction (16), l'évaluation étant de préférence réalisée dans le dispositif d'émission (42).

16. Table de cuisson à induction (13) pour la mise en oeuvre du procédé selon l'une des revendications précédentes, la table de cuisson à induction (13) présentant plusieurs bobines de chauffage à induction (16), chaque bobine de chauffage à induction (16) étant associée à au moins une zone de chauffage (17).
